Europäisches Patentamt

European Patent Office

Office européen des brevets

(19)

(11) Veröffentlichungsnummer: **0 148 451**
**B1**

(12) **EUROPÄISCHE PATENTSCHRIFT**

(45) Veröffentlichungstag der Patentschrift:
05.07.89

(21) Anmeldenummer: 84115468.5

(22) Anmeldetag: 14.12.84

(51) Int. Cl.⁴: **F 16 H 21/18**, F 16 H 21/52,
B 26 B 19/28

(54) Schwinghebelantrieb für elektrische Kleingeräte.

(30) Priorität: 23.12.83 DE 3346656

(43) Veröffentlichungstag der Anmeldung:
17.07.85 Patentblatt 85/29

(45) Bekanntmachung des Hinweises auf die Patenterteilung:
05.07.89 Patentblatt 89/27

(84) Benannte Vertragsstaaten:
AT CH FR GB LI NL

(56) Entgegenhaltungen:
EP-A- 0 023 690
CH-A- 538 335
DE-B- 2 749 436
DE-U- 8 409 239
GB-A- 919 363
JP-U-57 057 650
US-A- 3 561 115

(73) Patentinhaber: Braun Aktiengesellschaft,
Rüsselsheimer Strasse 22, D-6000 Frankfurt/Main (DE)

(72) Erfinder: Messinger, Werner, Schmiedeberger
Strasse 18, D-6242 Kronberg/Ts (DE)
Erfinder: Trölltsch, Karl, Idsteiner Strasse 61,
D-6000 Frankfurt/M. (DE)

(74) Vertreter: Einsele, Rolf, Braun Aktiengesellschaft
Postfach 1120 Frankfurter Strasse 145, D-6242 Kronberg
Taunus (DE)

ACTORUM AG

## Beschreibung

Die Erfindung bezieht sich auf eine Vorrichtung zur Umwandlung der Drehbewegung eines von einer Motorwelle angetriebenen Exzenters in eine hin- und hergehende Bewegung eines mit einem Achsbolzen gekoppelten Arbeitswerkzeuges von elektrisch angetriebenen Kleingeräten, in deren Gehäuse ein mit einem Achsbolzen versehener, doppelarmiger Schwinghebel schwenkbar gelagert und ein Schwingkörper vorgesehen ist entsprechend den Merkmalen im Oberbegriff von Anspruch 1.

Aus der DE-AS 2 749 936 ist ein Schwingglied für den Antrieb eines Messerblockes eines elektrischen Trockenrasierapparates bekannt, das zur Kupplung mit dem Messerblock eine Antriebsplatte aufweist, die über in der Bewegungsrichtung des Messerblockes flexible, am Gehäuse fest abgestützte Stützen aufweist und zur Kupplung mit dem Exzenter mit einem quer zur Bewegungsrichtung des Messerblockes flexiblen Kupplungsarm versehen ist. In Ruhestellung des Schwinggliedes verläuft die Mittenachse der Motorwelle des Rotationsmotors durch die den Exzenterbolzen aufnehmende Bohrung im Pleuelkopf sowie durch den Antriebsarm auf der Antriebsplatte des Schwinggliedes.

Aus dem japanischen Gebrauchsmuster 57-57650 ist ein gattungsgemäßer Trockenrasierapparat mit Rotationsmotor, einem oszillierenden Untermesser und einem Kurbelschwingengetriebe zur Umsetzung der Drehbewegung des Motors in eine oszillierende Bewegung des Untermessers bekannt. Die Motorwelle ist parallel zur Längsachse des in das Untermesser eingreifenden Schwinghebels ausgerichtet und um die Länge der Kurbelstange seitlich versetzt angeordnet. Die Kurbelstange ist im Bereich des Schwinghebels gabelförmig ausgebildet, wobei der Schwinghebel in diese Gabel eingreift und mittels eines Gelenkbolzens in der Gabel schwenkbar gehalten ist. Die Kurbelstange ist weiterhin über ein im Pleuelkopf vorgesehenes Exzentergetriebe mit der Motorwelle des Rotationsmotors verbunden. Die Schwinghöhe des Schwinghebels über die Kurbelstange kann nur unter Inkaufnahme von erheblichen Druckbeanspruchungen und hohen Reibungskräften in den beiden Lagerstellen, Gelenkbolzen und Exzentergetriebe, der Kurbelstange ausgeglichen werden. Ein erhöhter Energieverbrauch macht sich für den Benutzer eines solchen Gerätes bemerkbar dadurch, daß er nach kurzem Gebrauch z.B. nach einer geringen Anzahl von Rasuren den Akkumulator wiederaufladen oder die Batterien austauschen muß.

Aufgabe der vorliegenden Erfindung ist es, eine Vorrichtung der eingangs genannten Gattung zu schaffen, bei der die Umwandlung der Drehbewegung in eine hin- und hergehende Bewegung mit geringstmöglichen Verlusten an Antriebsenergie bewerkstelligt wird. Die Vorrichtung soll eine ungehinderte Bewegung in allen geforderten Freiheitsgraden reibungsarm gewährleisten und geräuscharm arbeiten. Darüberhinaus soll die Vorrichtung so gestaltet sein, daß die Mittenachse der Motorwelle des Rotationsmotors quer zur Längsachse des doppelarmigen Hebels auf einer gemeinsamen Achse als auch auf versetzt zueinanderliegenden Achsen, gelegt werden kann.

Nach der Erfindung wird diese Aufgabe durch die im Anspruch 1 enthaltenen Merkmale gelöst.

Die Lösung nach der Erfindung zeichnet sich durch einen geringen Leistungsverlust bei der Bewegungsumwandlung und ein gutes Schwingverhalten aus, was darauf zurückzuführen ist, daß die durch an sich bekannte (EP-A-23 690) Filmscharniere der beiden zusammengeführten Pleuelarme verlaufende, die Höhenkomponente der radialen Schwingbewegung des doppelarmigen Schwinghebels ausgleichende Biegeachse die Längsachse des zugeordneten Hebelarmes des doppelarmigen Schwinghebels kreuzt und mit dieser einen Gelenkpunkt bildet und daß die Längsachse des am doppelarmigen Schwinghebel starr befestigten Pleuelarmes in diesen Gelenkpunkt einmündet.

In weiterer Ausgestaltung der Erfindung ist vorgesehen, daß die Verbindungsachse der beiden Zusammenführungspunkte der Pleuelarme des Schwingkörpers die Längsachse des zugeordneten Hebelarmes des doppelarmigen Schwinghebels kreuzt.

Vorzugsweise fällt die Längsachse des angeformten Pleuelarmes im unteren Totpunkt des Hebelarmes 3 zusammen mit der Verbindungsachse der beiden Zusammenführungspunkte der Pleuelarme. Ein ausgewogener Massenausgleich des Schwingkörpers wird dadurch erzielt, daß die durch die beiden Zusammenführungspunkte der Pleuelarme verlaufende Verbindungsachse den Schwingkörper in zwei kongruente Hälften teilt.

Ein weiterer Vorteil der Vorrichtung nach der Erfindung besteht darin, daß diese Ausgestaltungen ermöglicht, die insbesondere die Anpassung dieser Vorrichtung auf vorgegebene Einbaukriterien in Geräten der angegebenen Gattung betreffen, und zwar ohne zusätzlichen Bauaufwand. Zu diesem Zweck kann sich die Längsachse des dem Pleuelarm zugeordneten Hebelarmes des doppelarmigen Schwinghebels sowohl in Richtung der Längsachse des mit einem Achsbolzen versehenen Hebelarmes erstrecken als auch unter Wahrung der Doppelarmigkeit winklig zu dieser Längsachse verlaufen.

Bei dieser Ausführungsform ist zu gewährleisten, daß die Verbindungsachse der Zusammenführungspunkte der beiden Pleuelarme die Längsachse des zugeordneten Hebelarmes des doppelarmigen Schwinghebels im rechten Winkel kreuzt. Hinzu kommt, daß die aufgezeigte Bewegungsumwandlung nach der Erfindung nicht beschränkt ist auf ein bestimmtes Hebelverhältnis der beiden Hebelarme des doppelarmigen Hebels. Dieses kann dem jeweiligen Anwendungsfall entsprechend variiert werden.

Weitere Merkmale, Vorteile und Einzelheiten der Erfindung ergeben sich aus der nachfolgenden Beschreibung und der Zeichnung, in denen bevorzugte Ausführungsbeispiele von Vorrichtungen zur Bewegungsumwandlung beispielsweise für den Einbau in einem Trockenrasierapparat dargestellt sind, und zwar zeigen:

Fig. 1 eine perspektivische Darstellung eines doppelarmigen Schwinghebels und eines Schwingkörpers,

Fig. 2 eine Draufsicht auf einen Schwingkörper und

Fig. 3 eine schematische Darstellung einer baulichen Variante eines doppelarmigen Schwinghebels mit Schwingkörper und Rotationsmotor.

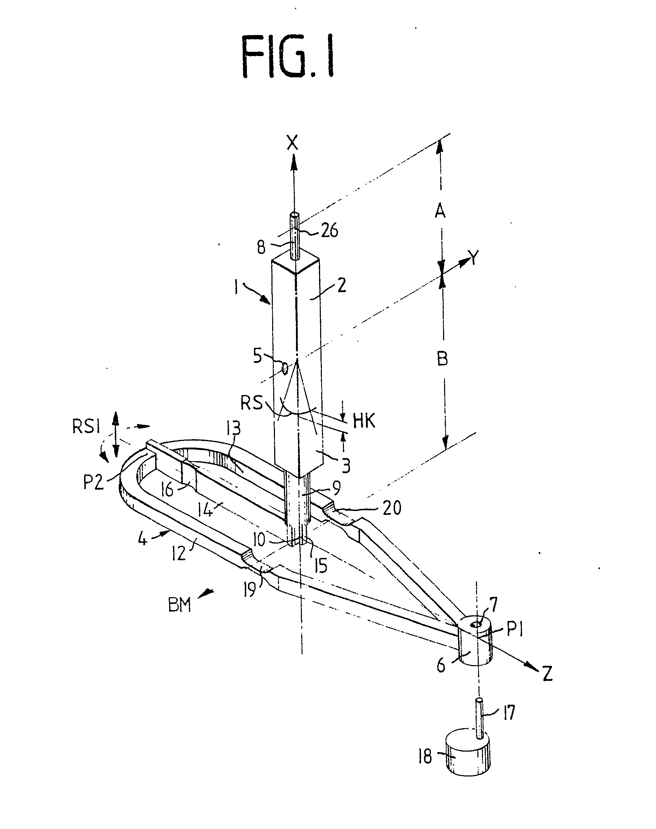

In Fig. 1 ist ein doppelarmiger Schwinghebel mit 1, der mit einem Achsbolzen 8 für ein anzutreibendes Arbeitswerkzeug z. B. den Messerblock eines Trockenrasierers versehene Hebelarm mit 2 und der dem Schwingkörper 4 zugeordnete Hebelarm mit 3 bezeichnet. Der doppelarmige Schwinghebel 1 weist eine Lagerbohrung 5 auf, deren Schwenkachse mit y bezeichnet ist. In die Lagerbohrung 5 greift ein nicht dargestellter an einem Gehäuseteil des Kleingerätes befindlicher Achsbolzen ein. Der Drehpunkt, der durch die Hebelarme 2 und 3, den Achsbolzen 8 und den Lagerbolzen 9 am Hebelarm 3 verlaufenden Längsachse x liegt auf der Schwenkachse y.

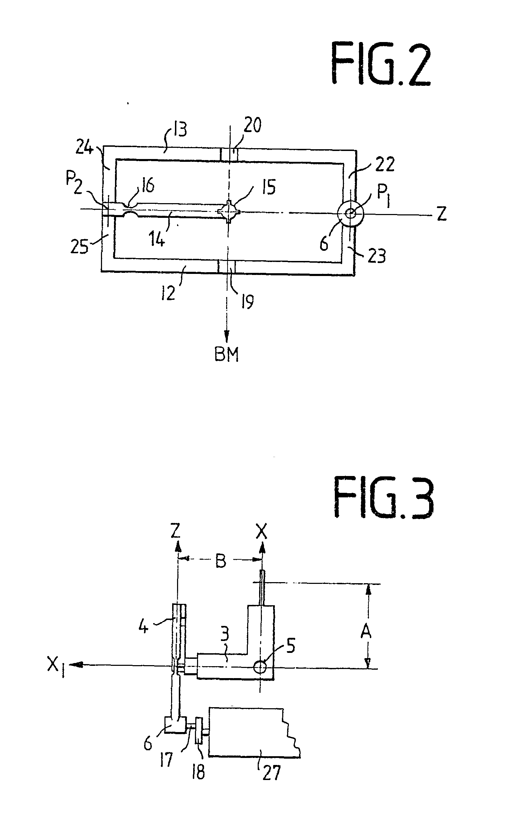

Der Schwingkörper 4 besteht aus drei Pleuelarmen 12, 13 und 14. Die Pleuelarme 12 und 13 sind an ihren jeweiligen Enden mittelbar über Querstege (Fig. 2) oder unmittelbar durch entsprechende Formgebung zu einem rahmenartigen Gebilde in Zusammenführungspunkten P1 und P2 zusammengeführt. Die Verbindungsachse der beiden Zusammenführungspunkte P1 und P2 ist mit z bezeichnet.

Der dritte Pleuelarm 14 ist im Zusammenführungspunkt P2 an den zusammengeführten Pleuelarmen 12 und 13 angeformt und erstreckt sich zwischen den Pleuelarmen 12 und 13 bis hin zum Lagerbolzen 9 des doppelarmigen Schwinghebels 1, an dem er über einen Befestigungskopf 15 starr befestigt ist. An dem dem Befestigungskopf abgewandten Ende des Pleuelarmes 14 ist ein parallel zur Längsachse verlaufendes Filmscharnier 16 vorgesehen.

Im Zusammenführungspunkt P1 der beiden Pleuelarme 12 und 13 ist ein Pleuelkopf 6 vorgesehen, in dessen Bohrung 7 ein Exzenterbolzen 17 eines Exzenters 18 zum Zwecke des Antriebes eingreift. Die beiden Pleuelarme 12 und 13 weisen jeweils ein Filmscharnier 19 und 20 auf, deren gemeinsame Biegeachse BM zwischen den beiden Zusammenführungspunkten P1 und P2 quer zur Verbindungsachse z verläuft, d. h. die Verbindungsachse z kreuzt. Ein als Gelenkpunkt 10 bezeichneter Kreuzungspunkt befindet sich vorzugsweise mittig zwischen den Zusammenführungspunkten P1 und P2. Die Längsachse x des doppelarmigen Schwinghebels 1 (Fig. 1) bzw. die Längsachse x1 (Fig. 3) des dem Schwingkörper 4 zugeordneten Hebelarmes 3 des doppelarmigen Schwinghebels ist so vorzusehen, daß diese bei allen Ausführungsformen nach der Erfindung durch den Gelenkpunkt 10 der Verbindungsachse z und der Biegeachse BM verläuft. Der Abstand von diesem Gelenkpunkt 10 zum Zusammenführungspunkt P2 bestimmt die Länge des Pleuelarmes 14.

Zum Zwecke eines ausgewogenen Massenausgleiches des Schwingkörpers 4 teilt die Verbindungsachse z den Schwingkörper 4 in zwei kongruente Hälften. Die Längsachse des Pleuelarmes 14 fällt im unteren Totpunkt der radialen Schwenkbewegung RS des Hebelarmes 3 um die Schwenkachse y zusammen mit der Verbindungsachse z. Die aus der radialen Schwenkbewegung RS des Hebelarmes 3 zu den jeweiligen oberen Totpunkten resultierende Höhenkomponente HK wirkt über den Pleuelarm 14 auf den Zusammenführungspunkt P2 der Pleuelarme 12 und 13 ein und bewirkt eine analoge Schwenkbewegung RS1 der vom Zusammenführungspunkt P2 bis zur Biegeachse BM führenden Pleuelarmteile 13 und 12 um die Biegeachse BM, während die von der Biegeachse BM bis zum Pleuelkopf 6 führenden Pleuelarmteile 13 und 12 ihre starre Position beibehalten.

Die Kreisbewegung des Exzenterbolzens 17 um das Exzenterlager des Exzenters 18 auf der Welle des Rotationsmotors zerfällt in eine lineare und in eine seitliche Komponente. Die seitliche Komponente bewirkt eine Schwenkbewegung der Pleuelarme 12 und 13 um die Biegeachse des Filmscharniers 16, während die lineare Komponente über die Pleuelarme 12 und 13 und dem im Zusammenführungspunkt P2 angeformten Pleuelarm 14 auf den Hebelarm 3 des doppelarmigen Schwinghebels 1 übertragen wird.

Bei dem Schwingkörper 4 nach Fig. 1 verlaufen die Pleuelarme 12 und 13 teilweise parallel zur Verbindungsachse z, wobei die dem Zusammenführungspunkt P2 zugewandten Enden in abgerundeter Form dem Zusammenführungspunkt P2 zugeführt sind, während die dem Zusammenführungspunkt P1 zugewandten Enden kurz nach den Filmscharnieren 19 und 20 in abgewinkelter Form dem Zusammenführungspunkt P1 zugeführt sind. Diese Formgebung des Schwingkörpers 4 ist besonders vorteilhaft, da die an die Schwingbrücke neben der Bewegungsumwandlung gestellten Forderungen wie Stabilität, geringer Materialbedarf und daraus resultierend geringe schwingende Masse in optimaler Weise erfüllt werden.

Figur 2 zeigt eine abgewandelte Formgebung des Schwingkörpers 4, der sich von dem nach Fig. 1 lediglich dadurch unterscheidet, daß die Pleuelarme 12 und 13 mittelbar über Querstege 22, 23, 24 und 25 den Zusammenführungspunkten P1 und P2 zugeführt werden. Aus dieser Figur ist weiter ersichtlich, daß der Zusammenführungspunkt P1 einerseits auf der Verbindungsachse z und andererseits auf der Mittenachse der Bohrung 7 im Pleuelkopf 6 liegt. Die Biegeachse BM der Filmscharniere 19 und 20 kreuzt die Verbindungsachse z. Im Kreuzungspunkt liegt der Gelenkpunkt 10. Am Pleuelarm 14 ist der Versteifungsrippen aufweisende Befestigungskopf 15 angeformt, zwecks Eingriff in eine entsprechend ausgebildete Öffnung im Lagerbolzen 9 und Herstellung einer starren Verbindung. Das Filmscharnier 16 im Pleuelarm 14 stellt das Gelenk für die seitliche Schwenkbewegung der Pleuelarme 12 und 13 dar.

Der Schwingkörper 4 ermöglicht aufgrund seiner Ausgestaltung und Anordnung der Gelenkstellen nach der Erfindung eine Vielzahl von baulichen Varianten des doppelarmigen Schwinghebels 1. Eine von der Grundversion nach Figur 1 abweichende Ausführungsform ist in Figur 3 dargestellt.

Die Grundversion nach Fig. 1 besteht aus dem doppelarmigen Schwinghebel 1 mit den beiden Hebelarmen 2 und 3, dem Achsbolzen 8, dem Lagerbolzen 9, dem Schwingkörper 4, dem Exzenterbolzen 17 und dem Exzenter 18, der von einem nicht dargestellten Rotationsmotor angetrieben wird. Die Länge des Hebelarmes 2, mit A bezeichnet, reicht von der Mitte der Lagerbohrung 5 bis zum Ankoppelungspunkt 26 eines mit dem Achsbolzen in Eingriff stehenden, nicht dargestellten Arbeitswerkzeuges, und die Länge des Hebelarmes 3, mit B bezeichnet, geht von der Mitte der Lagerbohrung 5 bis zum Gelenkpunkt 10. Ankoppelungspunkt 26, Mittelpunkt der Lagerbohrung 5 und Gelenkpunkt 10 liegen auf der Längsachse x des doppelarmigen Schwinghebels. Das Hebelverhältnis A : B der Hebelarme 2 und 3 kann A = B aber auch unterschiedlich d.h. A > B oder A < B entsprechend dem jeweiligen Anwendungsfall gestaltet werden.

Wie in Figur 3 dargestellt, ist es möglich, den dem Schwingkörper 4 zugeordneten Hebelarm 3 des doppelarmigen Schwinghebels 1 abzuwinkeln. In diesen Fällen ist lediglich zu gewährleisten, daß die Längsachse des abgewinkelten Hebelarmes 3, in Fig. 3 mit $x_1$ bezeichnet, die Längsachse x entweder im Mittelpunkt der Lagerbohrung 5 oder im Hebelarm 3 schneidet und daß die Verbindungsachse z des Schwingkörpers 4 die Längsachse $x_1$ des abgewinkelten Hebelarmes 3 im rechten Winkel kreuzt. Parallel zur Längsachse $x_1$ liegend ist ein Rotationsmotor 27 gelagert, dessen Motorwelle mit dem Exzenter 18 gekoppelt ist. Der Exzenter 18 steht über den Exzenterbolzen 17 in Eingriff mit dem Pleuelkopf 6 des Schwingkörpers 4.

**Patentansprüche**

1. Vorrichtung zur Umwandlung der Drehbewegung eines von einer Motorwelle angetriebenen Exzenters (18) in eine hin- und hergehende Bewegung eines mit einem Achsbolzen gekoppelten Arbeitswerkzeuges von elektrisch angetriebenen Kleingeräten, in deren Gehäuse ein mit einem Achsbolzen versehener, doppelarmiger Schwinghebel (1) schwenkbar gelagert und ein den Exzenter (18) mit dem doppelarmigen Schwinghebel (1) verbindender Schwingkörper (4) vorgesehen sind, dadurch gekennzeichnet, daß der Schwingkörper (4) aus drei Pleuelarmen (12, 13, 14) besteht, daß zwei Pleuelarme (12, 13) an ihren jeweiligen Enden mittelbar über Querstege (22, 23, 24, 25) und/oder unmittelbar durch entsprechende Formgebung zu einem rahmenartigen Gebilde zusammengeführt sind, daß in dem einen Zusammenführungspunkt (P1) der beiden Pleuelarme (12, 13) der Schwingkörper (4) mit dem Exzenter (18) gekoppelt ist und in dem gegenüberliegenden Zusammenführungspunkt (P2) der dritte Pleuelarm (14) sich zwischen den beiden Pleuelarmen (12, 13) erstreckend angeformt ist, daß das freie Ende des dritten Pleuelarmes (14) mit dem zugeordneten Hebelarm (3) des doppelarmigen Schwinghebel (1) starr verbunden und das gegenüberliegende Ende des dritten Pleuelarmes (14) mit einem Filmscharnier (16) versehen ist, und daß die beiden Pleuelarme (12, 13) jeweils mit einem Filmscharnier (19, 20) versehen sind, deren gemeinsame Mitten-/Biegeachse (BM) die Längsachse (x, x1) des zugeordneten Hebelarmes des doppelarmigen Schwinghebels (1) kreuzt.

2. Vorrichtung nach Anspruch 1, dadurch gekennzeichnet, daß die Verbindungsachse (z) der beiden Zusammenführungspunkte (P1, P2) der Pleuelarme (12, 13) des Schwingkörpers (4) die Längsachse (x, x1) des zugeordneten Hebelarmes (3) des doppelarmigen Schwinghebels (1) kreuzt.

3. Vorrichtung nach Anspruch 1 oder 2, dadurch gekennzeichnet, daß die Längsachse des angeformten dritten Pleuelarmes (14) im unteren Totpunkt des Hebelarmes 3 zusammenfällt mit der Verbindungsachse (z) der beiden Zusammenführungspunkte (P1, P2) der Pleuelarme (12, 13).

4. Vorrichtung nach einem oder mehreren der vorhergehenden Ansprüche, dadurch gekennzeichnet, daß die durch die beiden Zusammenführungspunkte (P1, P2) der Pleuelarme (12, 13) verlaufende Verbindungsachse (z) den Schwingkörper (4) in zwei kongruente Hälften teilt.

**Claims**

1. A device for converting the rotary motion of an eccentric (18) driven by a motor shaft into a reciprocating motion of a tool, coupled with a pin, of electrically powered small appliances having pivotally mounted in their housings a two-armed oscillating lever (1) provided with a pin, and a reciprocating body (4) connecting the eccentric (18) with the two-armed oscillating lever (1), characterized in that the reciprocating body (4) is comprised of three connecting rod arms (12, 13, 14), that two connecting rod arms (12, 13) have their respective ends interconnected indirectly by means of cross bars (22, 23, 24, 25) and/or directly by forming them into a suitable frame-shaped structure, that the reciprocating body (4) is coupled to the eccentric (18) in the one junction point (P1) of the two connecting rod arms (12, 13) while the third connecting rod arm (14) is formed on the opposite junction point (P2) such as to extend between the two connecting rod arms (12, 13), that the free end of the third connecting rod arm (14) is rigidly connected with the associated lever arm (3) of the two-armed oscillating lever (1) and the opposite end of the third connecting rod arm (14) is provided with a film hinge (16), and that the two connecting rod arms (12, 13) are each provided with a film hinge (19, 20) whose common center/bending axis (BM) intersects the longitudinal axis (x, x₁) of the associated lever arm of the two-armed oscillating lever (1).

2. A device as claimed in claim 1, characterized in that the connecting axis (z) of the two junction points (P1, P2) of the connecting rod arms (12, 13) of the reciprocating body (4) intersects the longitudinal axis (x, x₁) of the associated lever arm (3) of the two-armed oscillating lever (1).

3. A device as claimed in claim 1 or claim 2, characterized in that the longitudinal axis of the formed-on third connecting rod arm (14) coincides at bottom dead center of the lever arm (3) with the connecting axis (z) of the two junction points (P1, P2) of the connecting rod arms (12, 13).

4. A device as claimed in one or several of the preceding claims, characterized in that the connecting axis (z) extending through the two junction points (P1, P2) of the connecting rod arms (12, 13) divides the reciprocating body (4) into two congruent halves.

**Revendications**

1. Dispositif pour convertir le mouvement de rotation d'un excentrique (18), entraîné par l'arbre d'un moteur, en un mouvement de va-et-vient d'un outil, couplé à une broche, de petits appareils à entraînement électrique, dispositif dans le boîtier duquel sont prévus un levier oscillant (1), à double bras, muni d'une broche et dont la portée lui permet d'osciller, ainsi qu'un corps oscillant (4) reliant l'excentrique (8) au levier oscillant à double bras (1), caractérisé en ce que le corps oscillant (4) est constitué de trois bras de biellette (12, 13, 14); en ce que deux bras de biellette (12, 13) se rencontrent, à leurs extrémités respectives, indirectement par l'intermédiaire de traverses (22, 23, 24, 25) et/ou directement grâce à une conformation appropriée, pour donner une structure en forme de cadre; en ce qu'au premier point de rencontre (P1) des deux bras de biellette (12, 13), le corps oscillant (4) est couplé avec l'excentrique (8) et en ce qu'au point de rencontre opposé (P2), est rapporté le troisième bras de biellette (14) qui s'étend entre les deux bras de biellette (12, 13); en ce que l'extrémité libre du troisième bras de biellette (14) est solidarisée avec le bras correspondant (3) du levier oscillant à double bras (1) et en ce que l'extrémité opposée du troisième bras de biellette (14) est munie d'une partie amincie formant charnière (16); et en ce que les deux bras de biellette (12, 13) sont respectivement munis d'une partie amincie formant charnière (19, 20) dont l'axe de flexion commun (BM) intersecte l'axe longitudinal (x, x1) du bras correspondant du levier oscillant à double bras (1).

2. Dispositif selon la revendication 1, caractérisé en ce que l'axe de liaison (z) passant par les deux points de rencontre (P1, P2) des bras de biellette (12, 13) du corps oscillant (4) intersecte l'axe longitudinal (x, x1) du bras correspondant (3) du levier oscillant à double bras (1).

3. Dispositif selon la revendication 1 ou 2, caractérisé en ce qu'au point mort inférieur du bras de levier 3, l'axe longitudinal du troisième bras de biellette (14), rapporté, coïncide avec l'axe de liaison (z) passant par les deux points de rencontre (P1, P2) des bras de biellette (12, 13).

4. Dispositif selon l'une ou plusieurs des revendications précédentes, caractérisé en ce que l'axe de liaison (z) passant par les deux points de rencontre (P1, P2) des bras de biellette (12, 13) divise le corps oscillant (4) en deux moitiés superposables.

# FIG.1

# FIG.2

# FIG.3